# EUROPÄISCHE PATENTSCHRIFT

(11) **EP 0 424 761 B1**
(45) Veröffentlichungstag und Bekanntmachung des Hinweises auf die Patenterteilung: **27.07.1994**
(21) Anmeldenummer: 90119658.4
(22) Anmeldetag: 13.10.1990
(51) Int. Cl.: B32B 27/32, B32B 27/28, B32B 27/20

(54) **Heisskaschierbare, hochglänzende Mehrschichtfolien**
High gloss multilayer films which can be hot laminated
Feuilles multicouches brillantes, laminables à chaud

(30) Priorität: 26.10.1989 DE 3935643
(43) Veröffentlichungstag der Anmeldung: 02.05.1991
(73) Patentinhaber: Wolff Walsrode Aktiengesellschaft, D-29655 Walsrode (DE)
(72) Erfinder: Schinkel, Ingo, W-3030 Walsrode 1 (DE); Reiners, Ulrich, Dr., W-3044 Neuenkirchen (DE)
(74) Vertreter: Braun, Rolf, Dr.

(56) Entgegenhaltungen:
- EP-A- 0 224 862
- EP-A- 0 374 632
- GB-A- 2 119 707
- US-A- 4 629 657

## Beschreibung

Die vorliegende Erfindung betrifft heißkaschierbare und hochglänzende mindestens monoaxial orientierte Mehrschichtfolien mit einer heißkaschierbaren Schicht zum Herstellen eines Verbundes mit verschiedenen Substraten, wie z.B. Papier, Pappe, Kartonagen, Metall- und Kunststoffolien, Stoffbahnen, Gewebenetzen.

Für die Zwecke der vorliegenden Erfindung wird unter einer heißkaschierbaren Schicht eine Schicht verstanden, die in Folge ihrer relativ großen Dicke geeignet ist, die Folie mit anderen Substraten zu verbinden. Derartige Substrate sind beispielsweise Prospekt- und Bucheinbände, Schallplattenhüllen und Kartonverpackungen.

Mehrschichtfolien aus Polyolefinen, die eine gereckte Polypropylenschicht besitzen und mit verschiedenen heißklebefähigen Stoffen, z.B. Polyethylen, Ethylenvinylacetat oder Ionomeren beschichtet sind, sind z.B. bekannt aus den japanischen Offenlegungsschriften 60-109834, 53-4082, US-A-4 629 657 und EP-A-0 263 882. Die bekannten Mehrschichtfolien weisen diverse Nachteile auf, z.B. mangelnde Verbundhaftung, Rollneigung des kaschierten Produktes und insbesondere unbefriedigende optische Eigenschaften.

Aufgabe der Erfindung war es, heißkaschierbare Mehrschichtfolien zur Verfügung zu stellen, die die aufgeführten Nachteile, insbesondere die unbefriedigenden optischen Eigenschaften, nicht aufweisen und sich daher als Kaschierfolien, insbesondere für die Hochglanzkaschierung, eignen.

Gegenstand der Erfindung ist eine heißkaschierbare, mindestens monoaxial orientierte Mehrschichtfolie mit einer Basisschicht I, die im wesentlichen aus Polypropylen besteht und wenigstens einer Außenschicht II, die im wesentlichen aus Polypropylen sowie aus bekannten Antiblockadditiven wie z.B. Siliziumdioxid, Calciumcarbonat, Titandioxid, sowie polymeren Antiblockadditiven, deren rheologischen Eigenschaften so abgestimmt sind, daß sie in der Polypropylenmatrix eine eigene Phase ausbilden, besteht und wenigstens eine durch Wärmezufuhr heißkaschierbaren Schicht III mit copolymerisierten Ethyleneinheiten, dadurch gekennzeichnet, daß die Schicht III im wesentlichen enthält
ein Ethylenvinylacetat-Copolymer A) und
wenigstens ein Copolymer B), ausgewählt aus der Gruppe
B1) Ethylenethylacrylat-Copolymer und
B2) Ethylen-Acrylsäure-Copolymer
und daß die Schicht I frei von Antiblockmitteln ist.

In einer bevorzugten Ausführungsform besteht die Basisschicht I im wesentlichen oder vollständig aus einem Polypropylen. Vorzugsweise wird ein isotaktisches Polypropylen mit einer Dichte von 0,9 bis 0,91 g/cm³ und einem Schmelzflußindex von 1 bis 4 g/10 min (bei 230°C/21,6 N (nach DIN 53 735) verwendet. Die Schicht I enthält Slip- und Antistatikadditive, ist aber immer frei von Antiblockadditiven.

In einer bevorzugten Ausführungsform setzt sich die Außenschicht II im wesentlichen aus Polypropylen und immer aus Antiblockadditiven zusammen. Vorzugsweise wird ein isotaktisches Polypropylen mit einer Dichte von 0,9 bis 0,91 g/cm³ und einem Schmelzflußindex von 1 bis 4 g/10 min bei 230°C/21,6 N (nach DIN 53 735) verwendet. Die Schicht II enthält im allgemeinen 0,01 bis 0,5 Gew.-%, vorzugsweise 0,03 bis 0,1 Gew.-% fein verteilte Antistatikadditive. Antiblockadditive sind dabei solche Additive, die nur an der Oberfläche wirksam sind. Sie unterbrechen die ebene Topographie der Polypropylenoberfläche und verhindern dadurch das innige Aneinanderhaften und somit ein Verblocken der Folie.

Vorzugsweise werden anorganische, mit dem Polypropylen unverträgliche Additive wie Siliziumdioxid, Calziumcarbonat, Titandioxid und/oder Natriumaluminiumsilikat verwendet. Es kann aber auch ein organisches, unverträgliches Additiv fein verteilt in der Basisschicht enthalten sein, vorzugsweise polymere Teilchen aus Polystyrol, Polymethylmethacrylat, Polytetrafluorethylen, Polyamid und/oder Copolymeren dieser Verbindungen. Unverträglichkeit bedeutet dabei, das diese Polymere eine separate Phase bilden. Sie können einen anderen Schmelzpunkt und insbesondere einen anderen Elastizitätsmodul als das Polypropylen aufweisen.

Form und Größe einzelner Partikel der Additive sind so gewählt, das beim Orientierungsprozeß keine oder nur kleine Vakuolen gebildet werden.

In einer bevorzugten Ausführungsform enthält die heißkaschierbare Schicht III:
50 bis 95 Gew.-Teile, vorzugsweise 65 bis 95 Gew.-Teile des Ethylenvinylacetat-Copolymeren A
10 bis 50 Gew.-Teile, insbesondere 10 bis 35 Gew.-Teile des Ethylen-Ethylacrylat-Copolymeren B1) und/oder
5 bis 35 Gew.-Teile, vorzugsweise 8 bis 20 Gew.-Teile des Ethylen-Acrylsäure-Copolymeren B2) und gegebenenfalls
5 bis 50 Gew.-Teile eines Polybutens B3), insbesondere Polybuten-1.

In einer besonders bevorzugten Ausführungsform besteht die heißkaschlerbare Schicht III, abgesehen von möglicherweise vorhandenen üblichen Additiven, aus den angegebenen Copolymeren A), B1), B2) und gegebenenfalls B3), wobei es sich dann bei den angegebenen Gewichtsteilen um Gewichtsprozente handelt.

Das Ethylenvinylacetat-Copolymer A) enthält in einer bevorzugten Ausführungsform wenigstens 70, insbesondere 75 bis 95 Gew.-% polymerisierte Ethyleneinheiten, wobei in einer besonders bevorzugten Ausführungsform der restliche Anteil im wesentlichen oder vollständig aus polymerisiertem Vinylacetat besteht.

Das Ethylen-Ethylacrylat-Copolymer B1) enthält in einer bevorzugten Ausführungsform im wesentlichen polymerisierte Ethyleneinheiten, insbesondere wenigstens 88 Gew.-% polymerisierte Ethyleneinheiten, insbesondere 88 bis 92 Gew.-% polymerisierte Polyethyleneinheiten, wobei die rechtlichen Anteile im wesentlichen oder vollständig aus polymerisiertem Ethylacrylat bestehen.

Das Ethylen-Acrylsäure-Copolymer B2) besteht in einer bevorzugten Ausführungsform im wesentlichen aus polymerisierten Ethyleneinheiten, insbesondere wenigstens 85 Gew.-% polymerisierten Ethyleneinheiten, besonders bevorzugt zu 85 bis 95 Gew.-% aus polymerisierten Ethyleneinheiten, wobei die restlichen Anteile im wesentlichen oder vollständig aus polymerisierter Acrylsäure bestehen.

Das Ethylenvinylacetat-Copolymer A hat vorzugsweise einen Schmelzflußindex von 0,1 bis 15 g/10 min bei 230°C und 21,6 N (DIN 53 735), besonders bevorzugt von 0,3 bis 8 g/10 min bei 230°C und 21,6 N.

Die Mehrschichtfolie kann in den einzelnen Schichten die üblichen Additive und Hilfsmittel, wie z.B. Gleitmittel und Antistatika, enthalten.

Basisschicht I enthält keine Antiblockadditive. Außenschicht II enthält immer Antiblockadditive.

Antiblockadditive stören die optischen Eigenschaften einer Folie. Optische Störungen treten insbesondere an den Grenzflächen zwischen unterschiedlichen Polymeren auf. Durch Bereitstellen der erfindungsgemäßen Folie ist es gelungen, die Antiblockadditive in nur eine Außenschicht II zu legen und dadurch die Basisschicht I frei von Antiblockadditiven zu halten. Dadurch ergibt sich eine hervorragende Transparenz der Folie.

Die Grenzschicht zwischen den verschiedenen Polymeren der Basisschicht I und der Thermokaschierschicht III ist frei von Störstellen, wodurch die optischen Eigenschaften zusätzlich verbessert werden.

Die erfindungsgemäßen Mehrschichtfolien eignen sich daher besonders als Hochglanzkaschierfolien zum Herstellen von Papier- und Kartonverbunden zur Veredlung grafischer Erzeugnisse wie Buch, Schallplatten, CD-, Prospekteinbände etc., die auch genutet und geprägt werden können.

Die erfindungsgemäßen Mehrschichtfolien können nach üblichen Verfahren wie Laminierung, Beschichtung, Schmelzextrusion oder Schmelzcoextrusion produziert werden. In einer besonders bevorzugten Ausführungsform werden die Mehrschichtfolien nicht nur einmal sondern biaxial gereckt.

In einer bevorzugten Ausführungsform wird die Basisschicht I und die Außenschicht II coextrudiert und in einer Richtung gereckt, wobei anschließend an die Reckung eine Laminierung oder Extrusion der heißkaschierbaren Schicht III erfolgt.

Anschließend wird die so erhaltene Mehrschichtfolie noch einmal gereckt, vorzugsweise in die Richtung, in der noch keine Reckung vorliegt.

Die einzelnen Bestandteile der heißkaschierbaren Schicht III werden vorzugsweise in einer Verfahrensstufe zusammengegeben, aufgeschmolzen und auf die Basisfolie I so aufgetragen, daß die Schicht II außen liegt.

Die erfindungsgemäßen Mehrschichtfolien werden mindestens monoaxial, bevorzugt biaxial gereckt, wobei die Längsreckung vorzugsweise im Verhältnis 5:1 bis 7:1 und die Querreckung im Verhältnis 7:1 bis 10:1 vorgenommen wird.

In den erfindungsgemäßen Mehrschichtfolien hat die Polypropylenbasisschicht I im allgemeinen eine Dicke von 8 bis 50 µm, vorzugsweise 12 bis 20 µm, die Polypropylenaußenschicht II vorzugsweise eine Dicke von 0,6 bis 3 µm und die Thermokaschierschicht im allgemeinen eine Dicke von 5 bis 20 µm, vorzugsweise 7 bis 13 µm.

Die erfindungsgemäßen Folien können ein - oder beidseitig auch einer Corona-vorbehandlung unterzogen werden.

Gegenstand der Erfindung ist weiterhin ein Verfahren zur Herstellung einer erfindungsgemäßen Mehrschichtfolie, dadurch gekennzeichnet, daß eine Basisschicht I mit einer durch Wärmezufuhr aktivierbaren Schicht III versehen wird.

Gegenstand der Erfindung ist weiterhin ein Verfahren zur Herstellung von Verbunden aus beliebigen Substraten und einer erfindungsgemäßen Folie, dadurch gekennzeichnet, daß man das Substrat und die Folie unter Wärmeentwicklung und vorzugsweise nur geringem Druck zusammenführt, wobei die Schicht III der erfindungsgemäßen Folie dem Substrat zugewandt ist. Bei den Substraten handelt es sich vorzugsweise um Materialien, die üblicherweise für die Hochglanzkaschierung verwendet werden, wie z.B. Papier, Pappe, Karton, aber auch Folien, insbesondere Kunststoff- oder Metallfolien.

### Beispiel A

Eine heißkaschierbare Schicht III mit den in Tabelle 1 angegebenen Bestandteilen wird auf eine monoaxial gereckte Basisfolie aus Polypropylen der Dichte 0,905 g/cm³ und dem Schmelzindex von 3,3 g/10 min bei 230°C/21,6 N aufgetragen und anschließend gereckt, so daß eine Verbundfolie mit einer Längsreckung im Verhältnis 5:1 und einer Querreckung im Verhältnis 10:1 erhalten wird.

Die Basisfolie setzt sich aus einer Außenschicht II von 1,5 µm Dicke, die aus Polypropylen der Dichte 0,905 g/cm³ und dem Schmelzindex von 3,3 g/10 min bei 230°C/21,6 N sowie einem Zusatz von 600 ppm Siliziumdioxid mit einer mittleren Korngröße von 4 µm besteht, und einer Kernschicht I aus o.g. Polypropylen ohne Antiblockadditive zusammen. Die Basisfolie, die sich aus den Schichten I + II zusammensetzt, hat insgesamt eine Dicke von 15 µm und die heißkaschierbare Schicht eine Dicke von 7 µm.

### Vergleichsbeispiel B

Eine heißkaschierbare Schicht III mit den in Tabelle 1 angegebenen Bestandteilen wird auf eine monoaxial gereckte Basisfolie aus Polypropylen der Dichte 0,905 g/cm³ und dem Schmelzindex von 3,3 g/10 min bei 230°C/21,6 N aufgetragen und anschließend gereckt, so daß eine Verbundfolie mit einer Längsreckung im Verhältnis 5:1 und einer Querreckung im Verhältnis 10:1 erhalten wird.

Die Basisfolie ist einschichtig und homogen aufgebaut und enthält 600 ppm Siliziumdioxid mit einer mittleren Korngröße von 4 µm gleichmäßig verteilt.

Die Basisfolie hat eine Dicke von 15 µm und die heißkaschierbare Schicht eine Dicke von 7 µm.

**Tabelle 1**

| | | |
|---|---|---|
| Rezeptur der Schicht III | Copolymer A | 80 % Ethylenvinylacetat-Copolymer mit 21 % Vinylacetat Monomergehalt |
| | Copolymer B2 | 20 % Ethylenacrylsäure-Copolymer mit 9 % Acrylsäure Monomergehalt |
| Angaben in Gewichtsanteilen | | |

**Tabelle 2**

| | Glanz ¹⁾ GE | Trübung ²⁾ % |
|---|---|---|
| Folie aus Beispiel A | 94,8 | 4,0 |
| Folie aus Vergleichsbeispiel B | 91,5 | 5,3 |

| | | |
|---|---|---|
| Prüfvorschriften: 1) ASTM D 2457 | | |
| 2) ASTM D 1003 | | |

Die erfindungsgemäße Folie aus Beispiel A zeigt gegenüber dem Vergleichsbeispiel B insbesondere bei den Werten deutlich bessere optische Eigenschaften, die außerordentlich wichtig für die Hochglanzkaschierung sind.

Der Glanz ist bei der erfindungsgemäßen Folie um mehr als 3 Glanzeinheiten höher, die Trübung hat sich un 1,3 Prozentpunkte verringert.

### Meßverfahren

Zur Messung der optischen Eigenschaften wurden die zu untersuchenden Folien mit ihren Thermokaschierschichten gegen sich selbst bei einer Temperatur von 105°C und einem Anpreßdruck (Liniendruck) von 180 N/cm kaschiert.

Die angegebenen Werte sind Mittelwerte aus jeweils fünf Messungen beider Seiten.

## Patentansprüche

1. Heißkaschierbare, mindestens monoaxial orientierte Mehrschichtfolie mit einer Basisschicht I, die im wesentlichen aus Polypropylen besteht und wenigstens einer Außenschicht II, die im wesentlichen aus Polypropylen mit wenigstens einem Antiblockadditiv besteht und wenigstens einer durch Wärmezufuhr heißkaschierbaren Schicht III mit copolymerisierten Ethyleneinheiten, dadurch gekennzeichnet, daß die Schicht III im wesentlichen enthalt ein Ethylenvinylacetat-Copolymer A) und
wenigstens ein Copolymer B, ausgewählt aus der Gruppe
B1) Ethylenethylacrylat-Copolymer und
B2) Ethylen-Acrylsäure-Copolymer
und daß die Schicht I frei von Antiblockmitteln ist.

2. Mehrschichtfolie nach Anspruch 1, dadurch gekennzeichnet, daß als Antiblockadditiv Siliziumdioxid, Calciumcarbonat, Titandioxid oder ein Polymer, dessen rheologische Eigenschaften so abgestimmt sind, daß es in der Propylenmatrix eine eigene Phase ausbildet, verwendet wird.

3. Mehrschichtfolie nach wenigstens einer der vorhergehenden Ansprüche, dadurch gekennzeichnet, daß eine oder beide Außenseiten Corona vorbehandelt sind.

4. Folien nach Anspruch 1, dadurch gekennzeichnet, daß die Kernschicht I eine Dicke von 8 bis 50 µm, die Außenschicht II eine Dicke von 0,6 bis 3 µm und die Thermokaschierschicht III eine Dicke von 5 bis 20 µm hat.

5. Mehrschichtfolie gemäß Anspruch 1, dadurch gekennzeichnet, daß die Schicht II enthält
50 bis 95 Gew.-Teile Copolymer A
10 bis 50 Gew.-Teile Copolymer B1 und/oder
5 bis 35 Gew.-Teile Copolymer B2.

6. Folie nach wenigstens einem der vorhergehenden Ansprüche, dadurch gekennzeichnet, daß
Copolymer A zu wenigstens 70 Gew.-% aus copolymerisierten Ethyleneinheiten besteht,
Copolymer B1 zu wenigstens 88 Gew.-% aus copolymerisierten Ethyleneinheiten besteht und
Copolymer B2 zu wenigstens 85 Gew.-% aus copolymerisierten Ethyleneinheiten besteht.

7. Folien nach wenigstens einem der vorhergehenden Ansprüche, dadurch gekennzeichnet, daß in der Schicht III zusätzlich ein Polybuten B3 enthalten ist.

8. Verfahren zur Herstellung von Verbunden aus beliebigen Substraten und einer Folie, dadurch gekennzeichnet, daß man das Substrat und eine Folie gemäß Anspruch 1 unter Wärme- und Druckeinwirkung zusammenführt, wobei die Schicht III dem Substrat zugewandt ist.

9. Verfahren nach Anspruch 8, dadurch gekennzeichnet, daß das Substrat Papier, Pappe, Kunststoff, Metall, Holz, Stoff, Gewebe, Vlies, pflanzliche Produkte oder Netz ist.

## Claims

1. A heat-laminatable, at least monoaxially stretched multilayer film comprising a base layer I consisting essentially of polypropylene and at least one outer layer II consisting essentially of polypropylene with at least one anti-blocking additive and of at least one heat-activatable heat-laminatable layer III containing copolymerized ethylene units, characterized in that layer III essentially contains
an ethylene/vinyl acetate copolymer A) and
at least one copolymer B) selected from the group
B1) ethylene/ethyl acrylate copolymer and
B2) ethylene/acrylic acid copolymer
and in that layer I is free from anti-blocking additives.

2. A multilayer film as claimed in claim 1, characterized in that the anti-blocking additive used is silicon dioxide, calcium carbonate, titanium dioxide or a polymer of which the rheological properties are such that it forms a separate phase in the propylene matrix.

3. A multilayer film as claimed in at least one of the preceding claims, characterized in that one or both outsides are subjected to corona-pretreatment.

4. A film as claimed in claim 1, characterized in that the core layer I has a thickness of 8 to 50 µm, the outer layer II has a thickness of 0.6 to 3 µm and the heat-laminatable layer III has a thickness of 5 to 20 µm.

5. A multilayer film as claimed in claim 1, characterized in that layer II contains
50 to 95 parts by weight copolymer A,
10 to 50 parts by weight copolymer B1 and/or
5 to 35 parts by weight copolymer B2.

6. A film as claimed in at least one of the preceding claims, characterized in that at least 70% by weight of copolymer A consists of copolymerized ethylene units, at least 88% by weight of copolymer B1 consists of copolymerized ethylene units and at least 85% by weight of copolymer B2 consists of copolymerized ethylene units.

7. A film as claimed in at least one of the preceding claims, characterized in that layer III additionally contains a polybutene B3.

8. A process for the production of composites from substrates of any kind and a film, characterized in that the substrate and a film of the type claimed in claim 1, are combined under the effect of heat and pressure, layer III facing the substrate.

9. A process as claimed in claim 8, characterized in that the substrate is paper, cardboard, plastic, metal, wood, cloth, woven fabric, nonwoven fabric, a vegetable product or a net fabric.

## Revendications

1. Feuille multicouche laminable à chaud, orientée au moins monoaxialement, comportant une couche de base I constituée essentiellement de polypropylène et au moins une couche externe II constituée essentiellement de polypropylène comprenant au moins un additif antiadhérent, et au moins une couche III laminable à chaud par apport de chaleur, comportant des motifs éthylène copolymérisés, caractérisée en ce que la couche III contient essentiellement
un copolymère A) éthylène-acétate de vinyle et
au moins un copolymère B sélectionné dans le groupe constitué par :
B1) un copolymère éthylène -acrylate d'éthyle et
B2) un copolymère éthylène-acide acrylique
et en ce que la couche I est exempte d'agents antiadhérents.

2. Feuille multicouche selon la revendication 1, caractérisée en ce qu'on utilise comme additif antiadhérent du dioxyde de silicium, du carbonate de calcium, du dioxyde de titane ou un polymère dont les propriétés rhéologiques sont telles qu'il forme une phase propre dans la matrice de propylène.

3. Feuille multicouche selon au moins une des revendications précédentes, caractérisée en ce qu'on soumet préalablement une face externe ou les deux faces externes à un traitement corona.

4. Feuille selon la revendication 1, caractérisées en ce que la couche centrale I a une épaisseur comprise entre 8 et 50 µm, la couche externe II une épaisseur comprise entre 0,6 et 3 µm et la couche laminable à chaud III une épaisseur comprise entre 5 et 20 µm.

5. Feuille multicouche selon la revendication 1, caractérisée en ce que la couche II contient
50 à 95 parties en poids de copolymère A
10 à 50 parties en poids de copolymère B1 et/ou
5 à 35 parties en poids de copolymère B2.

6. Feuille selon au moins une des revendications précédentes, caractérisée en ce que le copolymère A se compose d'au moins 70% en poids de motifs éthylène copolymérisés, le copolymère B1 se compose d'au moins 88% en poids de motifs éthylène copolymérisés et le copolymère B2 se compose d'au moins 85% en poids de motifs éthylène copolymérisés.

7. Feuilles selon au moins une des revendications précédentes, caractérisées en ce que la couche III contient en outre un polybutène B3.

8. Procédé de fabrication de composites à partir de substrats quelconques et d'une feuille, caractérisé en ce qu'on réunit le substrat et une feuille selon la revendication 1 sous l'action de la chaleur et de la pression, la couche III étant tournée en direction du substrat.

9. Procédé selon la revendication 8, caractérisé en ce que le substrat est du papier, du carton, du plastique, du métal, du bois, de l'étoffe, du tissu, du non-tissé, des produits végétaux ou un voile.
